# EUROPEAN PATENT APPLICATION

(11) **EP 2 397 405 A1**
(43) Date of publication of application: **21.12.2011**
(21) Application number: 10710062.0
(22) Date of filing: 12.02.2010
(51) Int. Cl.: B64C 13/04

(54) **AIRCRAFT COMMAND AND CONTROL UNIT**

(30) Priority: 12.02.2009 ES 200900392
(71) Applicant: EADS Construcciones Aeronauticas, S.A., 28022 Madrid (ES)
(72) Inventor: FRADEJAS PÉREZ, Rafael, E-28007 Madrid (ES)
(74) Representative: Elzaburu Marquez, Alberto
(86) International application number: PCT/ES2010/070077
(87) International publication number: WO 2010/092222

(57) **Abstract**

The invention relates to a control and command assembly for an aircraft, particularly for controlling and commanding aircraft flight control surfaces, as well as for controlling and commanding aircraft devices requiring aerodynamic control, comprising:
- actuation means for moving the flight control surfaces; an automatic flight control system for the aircraft or aircraft device, connected to actuation means for moving the flight control surfaces; and
- at least one flight control knob (1) on which the operator or pilot acts and which receives a force (2) applied by the pilot, connected to the automatic flight control system and to the actuation means for moving the flight control surfaces, and which comprises:
- means for generating force on the knob and
- means for detecting the position of the knob;
the flight control knob (1) further comprising:
- means for detecting the force (2) applied on the knob (1); and

at least one control unit receiving information about the position of the knob (1) and about the force (2) applied on the knob, sending this information to the means for generating force on the knob (1).

## Description

### Field of the Invention

The present invention relates to a control and command assembly for aircraft, particularly for controlling, actuating and commanding flight-control surfaces in aircraft, as well as for commanding aircraft devices requiring aerodynamic control, such as the refueling boom in in-flight refueling operations.

### Background

Aircraft typically comprise control surfaces guiding the movement of the aircraft. In particular, the movements of the aircraft with regard to pitch, roll and yaw are controlled with the primary control surfaces, whereas the lift and the drag are acted upon with the secondary control surfaces. The positions of these control surfaces are thus commanded by means of an actuation system, comprising a control stick on which the pilot of the aircraft typically acts.

The mentioned control surfaces are commanded, in the classic conventional manner, through the direct action of the pilot of the aircraft, who receives the force directly from the aerodynamic surfaces of the external medium, and interacts by counteracting them through mechanical transmission systems. Assisted command systems for commanding control surfaces which incorporate hydraulic or electrical devices to assist the force which is exerted on the aerodynamic surfaces are also known; in these systems, the pilot does not have to exert force as in traditional control systems, whereby said pilot loses the sensation of what he or she is doing. There are furthermore systems comprising a force feedback, or haptic systems, transmitting a sensation of force to the pilot, these systems comprising spring type force generators or elastic systems, or electric motors.

An aircraft refueling boom is an airtight fuel dumping unit joined at its front end to a tanker aircraft, said boom comprising aerodynamic lifting surfaces, used to aerodynamically control the position of the boom in elevation and azimuth, the mentioned boom providing a passage for the fuel from the tank to the nozzle of the boom.

The receiver airplane is equipped with a refueling receptacle coupling with the nozzle of the boom for the refueling operation.

To control the previous refueling boom, the operator or boomer is in charge of commanding the refueling boom in the tanker airplane, which it performs by means of a control stick, acting therethrough on the aerodynamic control of the refueling boom, particularly on the pitch and roll movements of the mentioned boom.

Control and command assemblies acting on control surfaces (primary, secondary or both) of an aircraft are known in the art. There are two main types of such assemblies.

The first and simplest type generates the forces in the grip of a control stick on which the operator or pilot acts by means of springs, a small viscous damping by means of some type of hydropneumatic cylinder being added in the most sophisticated systems which prevents the stick from rebounding over and over again around its centre until stopping if it is abruptly released. The drawback of control assemblies with control sticks of this type is that they do not have the option of being able to modify the force on the control stick, based on the conditions of the aircraft at each time, while at the same time it is not possible to act on the dynamic performance of such sticks. An example of a control assembly of this type is described in document EP 0718734.

The second type of control and command assembly, which has started to be developed seriously in recent years, complements or substitutes the springs of the first type in control sticks with electric motors allowing a greater flexibility when defining the load curve of the grip of the control stick. However, these control sticks only allow applying a variable force on the grip (unlike spring control sticks), since their dynamic performance (as they do not have a reading of the force that the operator exerts on the grip of the control stick) is predetermined, as occurs in spring type sticks. In other words, having electric motors in control sticks enables the use of nonlinear curves, as occurred in the first case of control and command systems with sticks with springs. However, and as occurred in the first case, it is not possible to dynamically control the control stick, such that, if the stick is taken to an end position and released, the stick will return to its central position based on its own and intrinsic mechanical features, this being uncontrollable. An example of a control assembly of this type is described in document WO 03040844.

There are other documents, such as for example US 2007/0235594, describing the control of primary and secondary control surfaces of an aircraft, in which the control and command assemblies comprise control sticks, the performance of which does not respond to the previously described dynamic model either.

The present invention attempts to resolve the previously mentioned drawbacks.

### Summary of the Invention

The present invention thus provides a control and command assembly for controlling and commanding flight control surfaces of an aircraft, as well as for controlling and commanding aircraft devices requiring aerodynamic control. The invention particularly relates to a control and command assembly for controlling the refueling boom of a tanker airplane in in-flight refueling operations, specifically for controlling the pitch and roll of the mentioned boom.

The control and command assembly of the invention comprises: actuation means for moving the flight control surfaces; an automatic flight control system for the aircraft or aircraft device, connected to the actuation means for moving the flight control surfaces; and at least one flight control knob on which the operator or pilot acts and which receives a force applied by the mentioned pilot or operator, this flight control knob being connected to the automatic flight control system and to the actuation means for moving the flight control surfaces.

The mentioned flight control knob on which the operator or pilot acts in turn comprises, in addition to means for generating force on the mentioned flight control knob and means for detecting the position of said control knob, means for detecting the force applied on the knob and at least one control unit receiving information about the position of the knob and about the force applied on said knob, sending this information to the means for generating force of the flight control knob.

According to the invention, the control performed by the assembly of the invention on the flight control surfaces of the aircraft is carried out dynamically, taking into account, on one hand, the load that the external or flight conditions in each position exert on the flight control knob and, on the other hand, the force that the operator or pilot exerts on said flight control knob.

The most outstanding advantages and functionalities of the control and command assembly are thus the following:
- a dynamic performance (or, in other words, a sensation in the hand of the operator or pilot) which is totally adjustable to the needs of each specific mission or action of the control and command assembly;
- better follow-up dynamics in the Follow-Up mode: the denomination of Follow-up for the case of the refueling boom is equivalent to the performance of the flight stick of an aircraft in the event that the automatic pilot has been connected therein; in this case of coupled in-flight refueling, the flight control knob comprises an automatic load relief system moving the boom automatically to lighten the loads occurring in the mentioned boom due to the fact of being coupled with the receiver airplane, these loads being caused by gusts of wind, unexpected movements of the receiver airplane, etc.; the movement of the boom is thus always accompanied by the corresponding movement of the flight control knob, there always being concordance between the position of the boom or boom and the mentioned control;
- The capacity to detect when the operator is gripping the flight control knob and when not: an aspect differentiating the performance in the Follow-Up mode with an automatic pilot is that, if in an airplane flying with automatic pilot the pilot or operator holds the control knob, the system detects that the position in which said knob should be does not correspond with the position it actually has (since the pilot is preventing the movement thereof), which is interpreted as an emergency actuation, the system being immediately disconnected; this performance is not applicable in the case of the boom since what is intended when the operator acts on the control knob, the boom being coupled to the receiver airplane, is to superimpose a certain level of command on that applied by the automatic system, causing a disconnection not being intended in any case; another relevant aspect to be taken into account is that the position of the flight control knob fixes the desired position of the boom; this entails that if, being in a coupled mode, the system verifies that the control knob is not in the position which has been ordered to it (and which is the same as the position of the boom) it can never know if it is because the operator is applying a correction, due to the delays of the actual system, or due to a malfunction of the actual knob, which is not suitably fulfilling its function. With the detection of whether the flight control knob is actually held or not, that set forth disappears, since if there is a position discrepancy, but force is being read in the knob, there is no doubt that the operator is acting thereon and the position of the knob must be considered a real demand predominating over the action of the automatic system. By means of this functionality of the control knob according to the invention, the system can ignore the position values of the actual knob, insofar as it is not detected that said knob is being gripped, the errors due to the actual delays of the system and to a possible lack of dynamics thereof thus decreasing.

Other features and advantages of the present invention will be explained in the following detailed description of an illustrative embodiment of this object, with respect to the attached figures.

### Brief Description of the Drawings

Figure 1 shows a modeled diagram of the control and command assembly of the invention and of the external environment in which the same must operate.
Figure 2 shows a scheme of the different components of the control and command assembly of the invention.

### Detailed Description of the Invention

The invention thus relates to a control and command assembly for controlling and commanding flight control surfaces of an aircraft, as well as for controlling and commanding aircraft devices requiring aerodynamic control. The assembly of the invention comprises:
- actuation means for moving the flight control surfaces;
- an automatic flight control system for an aircraft or an aircraft device, connected to the actuation means for moving the flight control surfaces;
- at least one flight control knob 1 on which the operator or pilot acts and which receives a force 2 applied by the pilot, connected to the automatic flight control system and to the actuation means for moving the flight control surfaces, and which in turn comprises:
   - means for generating force on the knob 1, preferably electric motors 7;
   - means for detecting the position of the knob 1, these means comprising at least one resolver (8 or 9) and at least one potentiometer (12, 13, 14 or 15), ensuring a suitable measurement of the position of the knob 1, even in the case of possible eventualities of double failures of the assembly.
   - means for detecting the force 2 applied on the knob 1;
   - at least one control unit receiving information about the position of the knob 1 and about the force 2 applied on the knob, sending this information to the means for generating force on the knob 1.

The automatic flight control system for an aircraft or an aircraft device can be an automatic load relief system, this system further being able to be a system for lightening the loads occurring in the boom and its connections to the tanker airplane and to the receiver airplane in the event of in-flight refueling or fueling operations, the aircraft being a tanker airplane adapted to refuel a receiver aircraft.

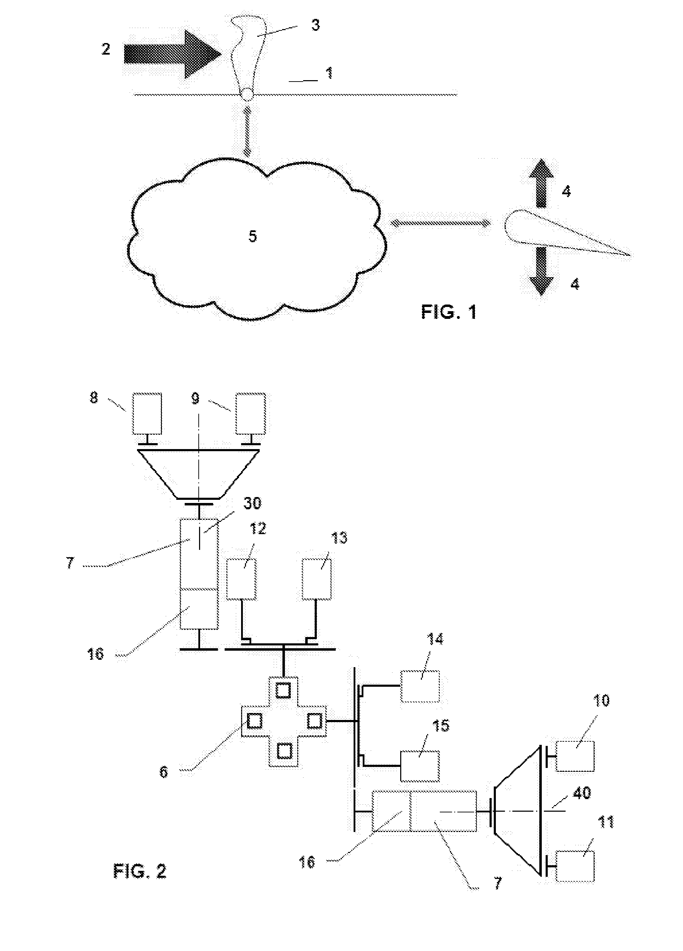

As observed in Figure 1, the force 2 applied by the pilot, boomer or operator (who acts on the refueling boom of the tanker airplane) on the grip 3 of a flight control knob 1 must balance the forces exerted by the external environment 4, depicted by an aerodynamic knob in the mentioned Figure 1. The previous forces, 2 and 4, must thus take into consideration systems of pulleys , hydraulic actuators or similar elements through which they must interact, such that said systems or actuators provide frictions, damping, mass, etc., a dynamic performance of the assembly of flight control knob 1 and external environment 4 thus being configured through a transmission system 5.

The control knob 1 according to the invention takes into account all the previous parameters (schematically depicted in the transmission system 5) to transmit to the hand of the operator or of the pilot the sensation that he or she is acting on a "real" mechanical/hydraulic system, which generates a sensation of confidence and control over something that the subconscious of the operator or pilot assimilates as natural and known from previous experience.

The control knob 1 according to the invention obviously does not act on any real system, therefore both the generation of the external forces 4 and the modeling of the transmission system 5 is completely fictitious and is performed by means of a combination of hardware and software.

The generation (or parametrization) of the external forces 4 is tabulated for each position of the control knob 1 in a prerecorded memory in the transmission system 5. There are several of these prerecorded tables, such that the operator, in the event of the operation which he or she performs on the refueling boom, can select any of them at his or her convenience.

In addition to the external forces 4 and the forces of the transmission system 5, it is necessary to know the force 2 that the operator or the pilot exerts on the control knob 1 so that, knowing the external force 4 applied (obtained from a data table depending on the position of the grip 3 of the knob 1) and the dynamic features of the system (transmission system 5), the control knob 1 is moved towards its balance position. That is why the assembly of control knob of the invention comprises means for detecting the force 2 applied on the knob 1. These means comprise at least one load cell 6 which can "read" the force 2 applied by the operator on the grip 3 of the knob 1, which makes the performance of the mentioned knob 1 be completely different from that of existing knobs, the following being able to be emphasized in this sense:
- programmable dynamic performance;
- the operator or pilot does not move the grip 3: it is the system as a whole which moves the motors 7 such that the grip 3 moves to its balance position, making the user believe that it is he or she who pushes the mentioned knob 1;
- it is possible to change the origin of forces of the table of external forces 4 such that, with the released knob 1 and by means of a simple command of the means for generating force on the knob 1, the grip 3 of said knob 1 is moved to a new set-point position;
- the means for detecting the force on the knob 1 allow knowing when the operator or pilot is holding the grip 3 of the knob 1, this being a very important aspect for being able to synchronize two knobs in a master/slave mode for training, as will be detailed below;
- since all the parameters of the system can be programmed, the operator, in the event of refueling operations, can have a very high precision and comfort level in the operation of the refueling boom in refueling operations.

Although the performance of the knob 1 in a single axis has been referred to in a simplified manner for the sake of clarity, the knob 1 acts on two axes simultaneously, the pitch axis 30 and the roll axis 40, which are joined through a mechanical system (Figure 2) to allow the complete control of the position of the refueling boom. However, from the functional point of view, both axes 30 and 40 are independent, therefore, except in relation to the mechanical part through which they are joined, no distinction will be made hereinafter between both axes.

Figure 2 shows a schematic diagram of the knob 1 according to the invention, said knob 1 comprising: means for generating force on the knob 1, means for detecting the position of the knob 1, means for detecting the force on the knob 1 and at least one control unit.

The control and command assembly according to the invention can further comprise second means for generating force on the knob (1), these second means comprising elastic devices which allow passing into safe mode in the event of a failure of the assembly.

The electrical motors 7 of the means for generating force on the knob 1 can be of the DC (direct current) or brush-free type, with a suitable reducer 16, such that the force level required in the knob 1, which can even be 100N, is reached.

The control unit of the knob 1 of the invention in turn comprises, for each axis, 30 and 40, a control module and a monitor module:
- the control module comprises one or several microprocessors which are responsible for the calculations and the PID of speed and the means for generating the force on the knob 1, preferably an electric motor 7, and the auxiliary circuits necessary for communications are commanded;
- the monitor module supervises the actions of the control module to detect possible failures and annul the control system 1 before any damage occurs therein, this module being able to autonomously annul the means for generating the force on the knob 1 and notify the system failure, comprising one or several microprocessors and the necessary auxiliary circuits.

Both modules, both the control module and the monitor module form the control unit of the knob 1, reading, by means of sensors and independent hardware, the position of the knob 1 as well as the force 2 which the pilot or operator exerts on said knob 1. The distribution of sensors in the control and monitor modules is, in the preferred embodiment of the invention, the following:
Control module for controlling pitch 30
   Resolver 8 of pitch 30
   Load cell 6 of pitch 30
   Potentiometer 14 of roll 40
Monitor module for monitoring pitch 30
   Resolver 9 of pitch 30
   Load cell 6 of pitch 30
   Potentiometer 15 of roll 40
Control module for controlling roll 40
   Resolver 10 of roll 40
   Load cell 6 of roll 40
   Potentiometer 12 of pitch 30
Monitor module for monitoring roll 40
   Resolver 11 of roll 40
   Load cell 6 of roll 40
   Potentiometer 13 of pitch 30

As is inferred from the foregoing, the reading of potentiometers 12, 13, 14, 15 is crossed between the pitch axis 30 and roll axis 40, for the purpose of increasing the availability of the system of the knob 1, i.e., the resistance to failures thereof because, if there were a failure annulling the control and the monitoring of one of the axes 30 or 40, the system could still continue operating, since it would have valid and redundant information about position through the other axis.

From the point of view of safety, it is important to point out that, regardless of the redundancies, the system of the knob 1 of the invention has dissimilar software in the control and monitor modules of the control system to reduce the influence of a failure of the software in common mode.

In summary, the new design of the control assembly of the invention intends to provide a series of functionalities which up until now were not found in known knobs, or were only found partially, in the rest of the units on the market. The following can be emphasized among these functionalities.
- capacity to select "on-line" the force curve to be applied on the knob 1;
- capacity to select "on-line" the force level to be applied on the knob 1;
- easy programming on land of the parameters fixing the response of the knob 1, such as viscous coefficient, mass, friction, etc.;
- assignment of different coefficients to the different force curves;
- capacity to move the knob 1 by means of Follow-Up command;
- capacity to synchronize with another knob in master/slave mode for training functions;
- possibility of knowing when the operator is acting on the knob 1;
- quadruple sensor redundancy;
- digital interface; and
- fault-tolerant power supplies.

Although the present invention has been described entirely in connection with preferred embodiments, it is evident that modifications comprised within the scope of the contents of the following claims can be introduced, such scope not being considered as limited by these embodiments.

## Claims

1. A control and command assembly for controlling and commanding flight control surfaces of an aircraft, as well as controlling and commanding aircraft devices requiring aerodynamic control, comprising:
- actuation means for moving the flight control surfaces; an automatic flight control system for the aircraft or aircraft device, connected to the actuation means for moving the flight control surfaces; and
- at least one flight control knob (1) on which the operator or pilot acts and which receives a force (2) applied by the pilot, connected to the automatic flight control system and to the actuations means for moving the flight control surfaces, and which comprises:
- means for generating force on the knob and
- means for detecting the position of the knob; **characterized in that** the flight control knob (1) further comprises:
- means for detecting the force (2) applied on the knob (1); and
- at least one control unit receiving information about the position of the knob (1) and of the force (2) applied on the knob, sending this information to the means for generating force on the knob (1).

2. The control and command assembly according to claim 1, **characterized in that** the means for detecting the force (2) applied on the knob (1) comprise at least one load cell (6).

3. The control and command assembly according to any of the previous claims, **characterized in that** the aircraft device requiring aerodynamic control is an in-flight refueling boom, the aircraft being a tanker airplane adapted to refuel a receiver airplane.

4. The control and command assembly according to any of the previous claims, **characterized in that** the automatic flight control system is an automatic load relief system.

5. The control and command assembly according to claim 4 when it depends on claim 3, **characterized in that** the automatic load relief system is a system for lightening the loads occurring in the boom and its connections to the tanker airplane and to the receiver airplane, when the boom is connected to the receiver airplane.

6. The control and command assembly according to any of the previous claims, **characterized in that** the means for generating force on the knob (1) are electric motors (7).

7. The control and command assembly according to any of the previous claims, **characterized in that** the means for detecting the position of the knob (1) comprise at least one resolver (8 or 9) and at least one potentiometer (12, 13, 14 or 15).

8. The control and command assembly according to claim 6, **characterized in that** it further has second means for generating force on the knob, comprising elastic devices which allow passing into safe mode in the event of a failure.
